(19) Europäisches Patentamt

European Patent Office

Office européen des brevets

(11) **EP 0 892 689 B1**

(12) **EUROPÄISCHE PATENTSCHRIFT**

(45) Veröffentlichungstag und Bekanntmachung des Hinweises auf die Patenterteilung:
**28.08.2002   Patentblatt 2002/35**

(51) Int Cl.7: **B21J 5/08**, B21K 21/08

(21) Anmeldenummer: 97914243.7

(86) Internationale Anmeldenummer:
**PCT/EP97/01299**

(22) Anmeldetag: **14.03.1997**

(87) Internationale Veröffentlichungsnummer:
**WO 97/038807 (23.10.1997 Gazette 1997/45)**

(54) **VERFAHREN ZUM ERHÖHEN DER WANDUNGSSTÄRKE BEI HOHLPROFILEN**

PROCESS FOR INCREASING THE WALL THICKNESS IN HOLLOW SECTIONS

PROCEDE POUR AUGMENTER L'EPAISSEUR DE LA PAROI DE PROFILES CREUX

(84) Benannte Vertragsstaaten:
**DE ES FR GB IT**

(30) Priorität: **13.04.1996   DE 19614656**

(43) Veröffentlichungstag der Anmeldung:
**27.01.1999   Patentblatt 1999/04**

(73) Patentinhaber:
- **AUDI AG**
  **85045 Ingolstadt (DE)**
- **FAHRZEUGWERK WERDAU GmbH & Co. KG**
  **08412 Werdau (DE)**

(72) Erfinder:
- **HALDENWANGER, Hans-Günther**
  **D-85055 Ingolstadt (DE)**
- **OSWALD, Jürgen**
  **D-39118 Magdeburg (DE)**
- **FISCHER, Frank**
  **D-08451 Crimmitschau (DE)**
- **WENZEL, Holger**
  **D-06667 Weissenfels (DE)**

(74) Vertreter: **Geissler, Manfred**
**Audi AG**
**Patentabteilung**
**Postfach 220**
**85045 Ingolstadt (DE)**

(56) Entgegenhaltungen:
| | |
|---|---|
| DE-A- 4 437 395 | SU-A- 1 417 954 |
| US-A- 4 213 322 | US-A- 4 313 328 |
| US-A- 4 625 533 | |

**Beschreibung**

Die Erfindung bezieht sich auf ein Verfahren zum Herstellen eines Bereiches erhöhter Wandungsstärke an einem länglichen Hohlprofil sowie auf eine Vorrichtung zur Durchführung des Verfahrens, nach dem Oberbegriff des Anspruchs 1 bzw. 7.

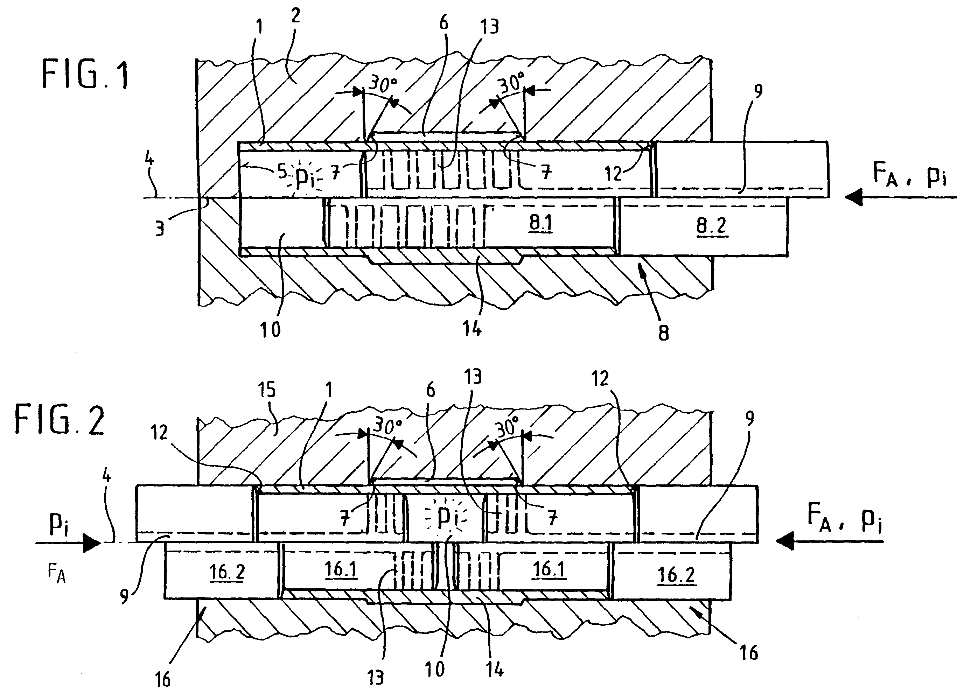

Ein solches Verfahren zur Herstellung einer erhöhten Wandungsstärke ist durch die SU-A-1417954, Figur 1, bekannt geworden. Dabei wird ein längliches Hohlprofil in einer den Profilaußenmaßen entsprechenden Matrize festgelegt, über beidseitig angreifende Axialkolben einem Axialdruck ausgesetzt und zusätzlich der Profil-Hohlraum mittels eines geeigneten Mediums einem Radialdruck ausgesetzt. Im Ergebnis wird dabei ein Hohlprofil hervorgebracht, welches über die gesamte Länge eine Verringerung des Innenquerschnittes erfährt, wodurch sich die erhöhte Wandungsstärke ergibt.

Die deutsche Patentanmeldung 44 37 395 A1 beschreibt ein Verfahren zum Verformen eines Rohrendes, bei dem das zu verformende Rohr Innen- und Axialdruck ausgesetzt wird, wobei das Rohr in einer den Rohraußenmaßen entsprechenden Matrize festgelegt wird und wobei femer in dem zu verformenden Endbereich des Rohres die Matrize mit einem auf die nach dem Verformungsvorgang vorgesehenen Enddimensionen des Rohres abgestimmten Profil versehen ist und das Rohr über zumindest einen Axialkolben einem stimseitigen Druck und zugleich mittels Fluid zumindest in dem zu verformenden Bereich einem Radialdruck ausgesetzt wird.

Die Praxis, Hohlprofile über Axialdruck und gleichzeitig ausgeübtem Radialdruck mittels Fluid zu verformen ist unter dem Begriff "Innenhochdruckumformen" bekannt (vgl. DE-A 29 35 086, EP 0 484 789 B1). Eine Erhöhung der Wandstärke beim umgeformten Hohlprofil ist damit nicht verbunden, vielmehr ergibt sich aufgrund der Materialstreckung eine Verminderung der verbleibenden Wandstärke. Ein Verfahren zum Anstauchen von Profilenden durch plastische Verformung mittels abgesetztem Axialkolben ist in der US-Patentschrift 5,203,194 beschrieben. Die Einleitung zusätzlichen Radialdruckes mittels eines Fluids ist dabei nicht vorgesehen.

Die Patentanmeldung DE 44 37 395 A1 befaßt sich in erster Linie mit der plastischen Verformung von Rohrenden für die Herstellung von masseoptimierten und langlebigen Abgasanlagen für Verbrennungsmotoren. Bereiche solcher Baugruppen mit funktionsbedingt veränderten Querschnittsabmessungen dienen beispielsweise dem Zweck des Befestigens von besonderen Maschinenelementen oder Baugruppen. Solche Baugruppen und Maschinenelemente können u. a. Schalldämpfer, Katalysatoren oder Anschlußflansche sein.

Ziel der Patentanmeldung DE 44 37 395 A1 ist es, ein Verfahren zum Anstauchen von Rohrenden und eine Vorrichtung zur Durchführung des Verfahrens hervorzubringen, mit deren Hilfe ein rohrförmiges Bauelement mit den im allgemeinen optimalen Querschnittsabmessungen so mit Endabschnitten verstärkter Querschnittsabmessungen ausgestattet werden kann, daß der Innendurchmesser praktisch übergangslos auch im Bereich des Rohrendes unverändert erhalten bleibt und dennoch für das Anfügen weiterer Komponenten, z. B. mittels Schweißverbindung, die erforderlichen Querschnittsabmessungen verfügbar sind.

Der Erfindung liegt die Aufgabe zugrunde, die Gestaltungsmöglichkeiten des bekannten Verfahrens nach dem Oberbegriff des Patentanspruches 1 zu erhöhen, um einen Bereich erhöhter Wandstärke an einem länglichen Hohlprofil herzustellen. Eine Veränderung des Innenquerschnittes des Hohlprofiles soll dabei nicht stattfinden.

Ausgehend von einer Verfahrensweise gemäß Oberbegriff des Patentanspruches 1 ist die erfindungsgemäße Lösung im Kennzeichen des Patentanspruches 1 zu sehen.

Sonach ist es möglich, durch mehr oder weniger geringfügige werkzeugseitige Modifikationen nicht die gesamte Länge eines Hohlprofiles mit einer erhöhten Wandungsstärke auszustatten, sondern vielmehr jeden beliebigen Bereich zwischen den Profilenden, bei gleichbleibendem Innenquerschnitt. Das Hohlprofil selbst kann dabei jede beliebige Querschnittsform aufweisen, (z. B. rechteckig, wie in der US-A 5, 203,194 beschrieben; kreisrund, polygonal, offen oder geschlossen usw.). Hierzu ist es lediglich erforderlich, Matrize bzw. Axialkolben in gleicher Weise zu formen.

Das Hohlprofil kann des weiteren sowohl aus einem metallischen als auch aus einem nichtmetallischen Werkstoff (z. B. Kunststoff) bestehen.

Gemäß Patentansprüchen 2 und 3 können in einem Arbeitsgang zwischen den Profilenden liegende Bereiche und zusätzlich auch die Profilenden angestaucht und bei der damit einhergehenden plastischen Verformung mit einer erhöhten Wandstärke ausgestattet werden.

Patentanspruch 7 beansprucht eine zur Durchführung des Verfahrens besonders geeignete Vorrichtung.

Die Erfindung ist nachstehend anhand von Ausführungsbeispielen beschrieben. Die zugehörige Zeichnung zeigt in

Fig. 1     eine Vorrichtung mit eingelegtem und zu verformendem Hohlprofil mit einem Axialkolben in einer Ausgangs- bzw. einer Endstellung,

Fig. 2     eine abgewandelte Vorrichtung mit zwei gegenüberliegend angeordneten Axialkolben in Ausgangs- bzw. Endstellung und

Fig. 3     eine nochmals abgewandelte Vorrichtung, wiederum mit zwei gegenüberliegend angeordneten Axialkolben und zwei umzuformenden Hohlprofilbereichen.

Gemäß Fig. 1 ist ein Hohlprofil 1, beispielsweise ein Stahlrohr, in eine geteilte Hohlmatrize 2 eingelegt, wobei die Matrizen-Trennebene 3 zur Zeichenebene orthogonal verlaufend, die Längsachse 4 des Hohlprofiles 1 schneidet. Das Hohlprofil 1 reicht soweit in den Hohlraum 10 der Hohlmatrize 2 hinein, daß es stirnseitig am Boden 5 anliegt.

Etwa im mittleren Bereich des Hohlprofiles 1 besitzt die geteilte Hohlmatrize 2 umlaufend eine Querschnittserweiterung, so daß sich zwischen der Außenwandung des Hohlprofiles 1 und dem in diesem Bereich erweiterten Innendruchmesser der Hohlmatrize 2 ein Zwischenraum 6 bildet. Der Übergang vom kleineren zum größeren Durchmesser ist als Haltekante 7 mit jeweils einem Winkel von ca. 30° gegenüber der Senkrechten zur Längeachse 4 ausgebildet.

Zum Werkzeugsatz gehört außerdem ein Axialkolben 8, der mit einer durchgehenden axialen Bohrung 9 für ein Fluid ausgestattet ist. Als Druckflüssigkeit eignet sich beispielsweise Wasser, vorzugsweise Wasser mit synthetischen Zusätzen.

Der profilierte Axialkolben 8 besteht aus einem vorderen, in das Hohlprofil 1 einzuführenden und in der Formgebung entsprechend angepaßten Kolbenteil 8.1, an den sich ein hinterer, den Abmaßen des Hohlraumes 10 angepaßter Kolbenteil 8.2 anschließt. Der Übergang vom kleinem auf den größeren Querschnitt des Axialkolbens 8 ist als Dichtschulter 12 ausgebildet, deren axiale Schnittfläche geringfügig (z. B. 15°) zur Senkrechten der Längsachse 4 des Axialkolbens 8 geneigt ist.

Der Axialkolben 8 besitzt im Bereich des Zwischenraumes 6 der Hohlmatrize 2 eine Anzahl (z. B. sechs) von Reihen sternförmig angeordneter, radialer Bohrungen 13, die zwischen der axialen Bohrung 9 und der Umfangsfläche des Axialkolbens 8 sich erstrecken. Jede Bohrungsreihe liegt auf einer zur Zeichenebene senkrechten Ebene und besteht aus einer Anzahl (z. B. sechs) von Einzelbohrungen, die einen gleichmäßigen Versatz (z. B. Winkel 60°) zueinander aufweisen.

Der Axialkolben 8 wird nach seiner Anlage mit der Dichtschulter 12 an der Stirnseite des Hohlprofiles 1 (das Ende des vorderen Kolbenteiles 8.1 liegt dabei etwa im Bereich der vorderen Haltekante 7 des Zwischenraumes 6) zunächst mit einer axialen Schubkraft $F_A$ (z. B. 5 kN) belastet. Daraufhin wird durch die axiale Bohrung 9 das Fluid durch den Axialkolben 8 gepumpt und anschließend mit einem gewissen Druck (z. b. 0,5 MPa) belastet. In dieser Situation bildet sich zwischen der Stirnseite des Axialkolbens 8 und dem Boden 5 der Hohlmatrize 2 ein Preßsitzbereich (Hohlraum 10) aus, in dem das an der Matrizenwandung anliegende Hohlprofil 1 gegen Ausknicken gestützt wird. Das Fluid liegt darüberhinaus über die radialen Bohrungen 9 am zu stauchenden Bereich des Hohlprofiles 1 an. Mit der Vergrößerung der axialen Schubkraft $F_A$ auf den Axialkolben 8 (z. B. bis auf einen Wert von über 100 kN) und der gleichzeitigen Vergrößerung des Innendruckes $P_i$ des Fluids (z. B. auf wenigstens 15 MPa) erfolgt das plastische Umformen des Hohlprofiles 1 im umzuformenden Bereich bis zum vollständigen Ausfüllen des Zwischenraumes 6. Der wandverstärkte Bereich 14 des Hohlprofiles 1 (siehe unterer Teil von Fig. 1) besitzt einen unveränderten Innenquerschnitt, jedoch eine um z. B. drei Millimeter verstärkte Wanddicke.

Nach Abschluß des Umformprozesses wird der Axialkolben 8 aus der geteilten Hohlmatrize 2 bei gleichzeitiger Entspannung des Fluids herausgefahren. Nach Auseinanderfahren der Hohlmatrizen-Teile kann das umgeformte Hohlprofil 1 entnommen und anschließend bedarfsweise weiter bearbeitet (z. B. gebogen, mit anderen Bauteilen mittels Schweißen verbunden usw.) werden.

Beim erfindungsgemäßen Verfahren wird also mittels eines Stauchvorganges eine bereichsweise Wandverstärkung eines Hohlprofiles 1 erreicht. Dabei findet im Stauchbereich unter der Wirkung der radialen Belastung durch das Fluid auch eine tangentiale Belastung der Hohlprofilwand im Zuge des eingeleiteten Aufweitungsprozesses und zugleich die axiale Druckbelastung durch die Schubkraft des Axialkolbens 8 statt. Die daraus resultierende mehrdimensionale Belastung übersteigt definiert den elastischen Verformungswiderstand und führt zur gewünschten plastischen Verformung.

Es ist sinnvoll, die axiale Schubkraft $F_A$ gemeinsam mit dem Innendruck $P_i$ in Abhängigkeit von der offenen Profilquerschnittsfläche $A_R$ nach der Beziehung

$$F_A = 1{,}1 \times A_R \times P_i$$

zu steigern. Damit wird u. a. sichergestelllt, daß es keinesfalls infolge einseitig gesteigerter axialer Schubkräfte zum Ausknicken der Profilwand im Preßsitzbereich kommt. Gleichzeitig wird die Dichtheit zwischen Dichtschulter 12 und Stirnseite des Hohlprofiles 1 gewährleistet.

Die mit der Dichtschulter 12 des Axialkolbens 8 eine Dichtpaarung bildende Stirnseite des Hohlprofils 1 wird durch spanabhebende, kaltumformende, mechanische oder thermische Trennverfahren als eine die Dichtheit und die axiale Belastbarkeit gewährleistende Fläche hergestellt.

Denkbar wäre, daß ggf. auf die radialen Bohrungen 9 verzichtet werden kann, weil durch die vorhandene Bemaßungstoleranz zwischen vorderem Kolbenteil 8.1 und Innenwandung des Hohlprofiles 1 und der damit einhergehenden gewissen Undichtigkeit der radiale Druckaufbau durch das Fluid und damit die radiale Belastung des Hohlprofiles 1 im Bereich des Zwischenraumes 6 ohnehin gegeben ist.

Fig. 2 zeigt eine abgewandelte Ausführungsform des Werkzeuges zur Herstellung einer Wandstärkenerhöhung im mittleren Bereich des Hohlprofiles 1. Im wesentlichen kann dabei auf die vorstehenden Ausführungen zum Ausführungsbeispiel gem. Fig. 1 zurückgegriffen werden, weshalb auch an entsprechender Stelle die gleichen Bezugszeichen verwendet werden.

Auch bei diesem Ausführungsbeispiel wird eine geteilte Matrize 15 verwendet, deren Trennebene entlang der Längsachse 4 verläuft. Abweichend zum Ausführungsbeispiel nach Fig. 1 kommen nunmehr zwei Axialkolben 16 zum Einsatz, jeweils bestehend aus einem vorderen Kolbenteil 16.1 und einem hinteren Kolbenteil 16.2. Bei der Umformung, also dem Stauchvorgang zum Ausfüllen des Zwischenraumes 16 mit dem Material des Hohlprofiles 1, können sich beide Axialkolben 16 aufeinanderzubewegen (Schubkraft $F_A$), jeweils unter gleichzeitigem Aufbringen des Fluiddrucks $P_i$. Denkbar ist aber auch, daß nur einer der beiden Axialkolben 16 sich bewegt, während der andere lediglich zum Abdichten des Systems (Dichtschulter 12) sowie zum Abstützen des Hohlprofil-Materials im Bereich der Haltekante 7 dient.

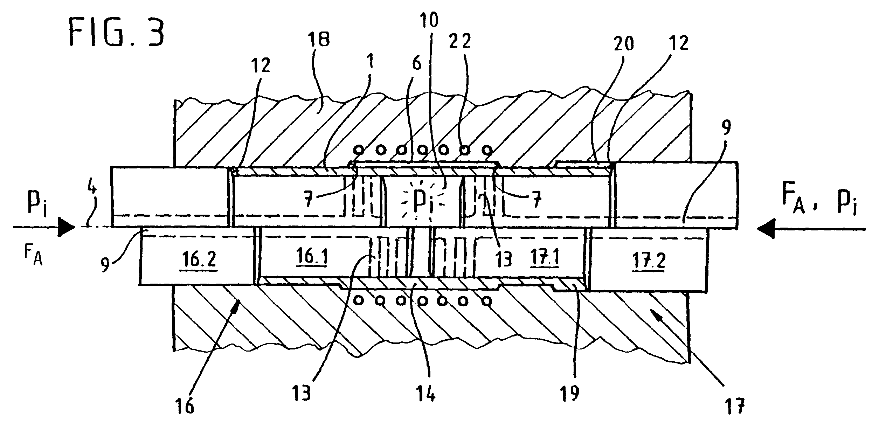

Das Ausführungsbeispiel gemäß Fig. 3 arbeitet ebenfalls mit 2 Axialkolben 16,17, die sich in einer wiederum geteilten Matrize 18 bewegen. Abweichend zum Ausführungsbeispiel gemäß Fig. 2 ist, daß nunmehr nicht nur zwischen den Profilenden (also z. B. im mittleren Bereich) des Hohlprofiles 1 ein wandverstärkter Bereich 14 entsteht, sondern daß ein solcher wandverstärkter Bereich 19 zusätzlich an einem der beiden Profilenden (am rechten) selbst herausgebildet wird. Selbstverständlich könnte dieser wandverstärkte Bereich auch am gegenüberliegenden Profilende ausgebildet werden, oder auch an beiden Profilenden.

Zu diesem Zweck ist die geteilte Matrize 18 im Bereich des besagten Profilendes mit einer entsprechenden Querschnittserweiterung ausgestattet, so daß ein weiterer Zwischenraum 20 entsteht, der später, nach der Umformung, mit dem Material des Hohlprofiles 1 gefüllt ist.

Damit bei der Bewegung der beiden Axialkolben 16,17 (oder auch nur der Bewegung eines der beiden Kolben) zunächst der Zwischenraum 6 und erst danach der Zwischenraum 20 im Rahmen des Fließpreßvorganges mit dem Material des Hohlprofiles 1 gefüllt werden (auch die umgekehrte Reihenfolge ist denkbar), ist es sinnvoll, das Material des Hohlprofiles 1 im Bereich des Zwischenraumes 6 gezielt so zu behandeln, daß es letztendlich "verformungswilliger" wird, als dies im Bereich des Zwischenraumes 20 der Fall ist. Dies kann beispielsweise durch lokale reibungsmindernde Beschichtungen des Werkzeuges (Matrize 18 und/oder Axialkolben 16,17) und/oder des Hohlprofiles 1 geschehen. Dies kann weiter beispielsweise durch eine lokale Aufheizung (über die Länge des Zwischenraumes 6 verlaufende und das Hohlprofil 1 dort umgebende, in der geteilten Matrize 18 angeordnete Heizkanäle 22) geschehen. Bei der Temperaturführung ist allerdings der Siedepunkt des Fluids (z. B. Wasser) zu beachten, so daß diese Maßnahme von begrenzter Wirkung ist, insbesondere dann, wenn das Hohlprofil 1 aus einem metallischen Werkstoff besteht. Eine weitere Möglichkeit wäre, daß das Hohlprofil 1 im Bereich des Zwischenraumes 6 von vorneherein eine etwas geringere Wandstärke aufweist oder weichgeglüht ist (Hohlprofil aus Metall), also von daher schon "verformungswilliger" ist, als dies im Bereich des Zwischenraumes 20, also an dem ebenfalls umzuformenden Profilende der Fall ist. Vorstehende Maßnahmen könnten sich auch dann als sinnvoll erweisen, wenn mindestens zwei zwischen den Profilenden gelegene Bereiche des Hohlprofiles 1 eine erhöhte Wandstärke erhalten sollen und am Profilende selbst keine Wandstärkenerhöhung vorgesehen ist.

## Patentansprüche

1. Verfahren zum Herstellen eines Bereiches erhöhter Wandungsstärke an einem länglichen Hohlprofil (1), welches hierfür einem Radial- und Axialdruck ausgesetzt und dabei plastisch verformt wird, wobei das Hohlprofil (1) in einer den Profilaußenmaßen entsprechenden Matrize (2; 15; 18) festgelegt wird **dadurch gekennzeichnet, daß** im Verformungsbereich die Matrize (2; 15; 18) mit einer auf die nach dem Verformungsvorgang vorgesehenen Enddimensionen des Hohlprofiles (1) abgestimmten Querschnittserweiterung versehen wird und daß die Verformung zum Erreichen einer erhöhten Wandstärke (14) in einem zwischen den Profilenden gelegenen Bereich erfolgt.

2. Verfahren nach Anspruch 1, **dadurch gekennzeichnet, daß** die Verformung sowohl in einem zwischen den Profilenden gelegenen Bereich als auch an mindestens einem der beiden Profilenden erfolgt.

3. Verfahren nach Anspruch 2, **dadurch gekennzeichnet, daß** die Verformung der Anzahl von Profilbereichen in einem Arbeitsgang erfolgt.

4. Verfahren nach Anspruch 1, **gekennzeichnet durch** eine unterschiedliche Ausgangs-Wandstärke des Hohlprofiles (1) zum Herbeiführen einer über die Länge des Hohlprofiles (1) abgestuften Verformungswilligkeit.

5. Verfahren nach Anspruch 1, **gekennzeichnet durch** ein lokales Weichglühen des Hohlprofiles (1) zum Herbeiführen einer über die Länge des Hohlprofiles (1) abgestuften Verformungswilligkeit.

6. Verfahren nach Anspruch 1, **gekennzeichnet durch** lokales Aufbringen von reibungsmindernden Beschichtungen zum Herbeiführen einer über die Länge des Hohlprofiles (1) abgestuften Verformungswilligkeit.

7. Vorrichtung zum Herstellen eines Bereiches erhöhter Wandungsstärke an einem länglichen Hohlprofil (1), mit Mitteln zum Einleiten eines Radialund Axialdruckes zur plastischen Verformung des Hohlprofiles (1), wobei das Hohlprofil (1) in einer den Profilaußenmaßen entsprechenden Matrize (2; 15; 18) festgelegt wird, **dadurch gekennzeichnet, daß** ein zwischen den Profilenden eines eingelegten Hohlprofiles (1) gelegener Bereich einer geteilten Hohlmatrize (2;15;18) eine den vorgesehenen Enddimensionen des Hohlprofiles (1) entsprechende Querschnittserweiterung (6) aufweist, daß ein oder zwei einander gegenüberliegend angeordnete und innerhalb eines Hohlraumes (10) der geteilten Hohlmatrize (2; 15; 18) bewegbar aufgenommene Axialkolben (8; 16;17) angeordnet sind, die zum Erhöhen der Wandungsstärke die Querschnittserweiterung (6) überfahren.

8. Vorrichtung nach Anspruch 7, **dadurch gekennzeichnet, daß** die Hohlmatrize (18) eine weitere, dem Profilende des Hohlprofiles (1) zugeordnete Querschnittserweiterung (20) aufweist.

**Claims**

1. Process for producing a zone of increased wall thickness on an elongated hollow section (1) which is subjected to radial and axial pressure and in the process plastically deformed, wherein the hollow section (1) is fixed in a die (2; 15; 18) corresponding to the external dimensions of the section, **characterized in that** the die (2; 15; 18) is provided in the deformation zone with a widened cross-section adapted to the intended final dimensions of the hollow section (1) after the deformation process, and **in that** deformation to obtain an increased wall thickness (14) takes place in a zone situated between the ends of the section.

2. Process according to Claim 1, **characterized in that** deformation takes place in a zone situated between the ends of the section and also at at least one of the two ends of the section.

3. Process according to Claim 2, **characterized in that** deformation of the plurality of section zones takes place in one working cycle.

4. Process according to Claim 1, **characterized by** a non-uniform initial wall thickness of the hollow section (1) to induce a susceptibility to deformation that is graduated over the length of the hollow section (1).

5. Process according to Claim 1, **characterized by** a local soft annealing of the hollow section (1) to induce a susceptibility to deformation that is graduated over the length of the hollow section (1).

6. Process according to Claim 1, **characterized by** local application of antifriction coatings to induce a susceptibility to deformation that is graduated over the length of the hollow section (1).

7. Apparatus for producing a zone of increased wall thickness on an elongated hollow section (1), with means for inducing radial and axial pressure for plastic deformation of the hollow section (1), wherein the hollow section (1) is fixed in a die (2; 15; 18) corresponding to the external dimensions of the section, **characterized in that** a zone of a split hollow die (2; 15; 18) situated between the ends of an inserted hollow section (1) has a widened cross-section (6) corresponding to the intended final dimensions of the hollow section (1), [and in] that one, or two opposing, axial plunger(s) (8; 16; 17) movably held inside a cavity (10) of the split hollow die (2; 15; 18) traverse the [zone of] widened cross-section (6) to increase the wall thickness.

8. Apparatus according to Claim 7, **characterized in that** the hollow die (18) has a further [zone of] widened cross-section (20) corresponding to the end of the hollow section (1).

**Revendications**

1. Procédé pour fabriquer une zone à épaisseur de paroi augmentée sur un profilé creux (1) allongé, qui est, pour cela, exposé à une pression radiale et axiale et est alors déformé de façon plastique, le profilé creux (1) étant fixé dans une matrice (2; 15; 18) correspondant aux dimensions extérieures du profilé, **caractérisé en ce que**, dans la zone de déformation, la matrice (2; 15; 18) est munie d'un élargissement de section transversale, adapté aux dimensions finales prévues après le processus de déformation du profilé creux (1), et **en ce que** la déformation visant à obtenir une épaisseur de paroi (14) augmentée s'effectue dans une zone située entre les extrémités de profilé.

2. Procédé selon la revendication 1, **caractérisé en ce que** la déformation se fait tant dans une zone située entre les extrémités de profilé, qu'également en au moins l'une deux extrémités de profilé.

3. Procédé selon la revendication 2, **caractérisé en ce que** la déformation de la pluralité de zones de profilé se fait en une passe opératoire.

4. Procédé selon la revendication 1, **caractérisé par** une épaisseur de paroi initiale, différente, du profilé (1), visant à provoquer une aptitude à la déformation, étagée sur la longueur du profilé creux (1).

5. Procédé selon la revendication 1, **caractérisé par** un recuit d'assouplissement local du profilé creux (1) visant à provoquer une aptitude à la déformation, étagée sur la longueur du profilé creux (1).

6. Procédé selon la revendication 1, **caractérisé par** une application locale de revêtements diminuant le frottement, visant à provoquer une aptitude à la déformation étagée sur la longueur du profilé creux (1).

7. Dispositif de fabrication d'une zone à épaisseur de paroi augmentée sur un profilé creux (1) allongé, avec des moyens pour induire une pression radiale et axiale dans le but d'une déformation plastique du profilé creux (1), le profilé creux (1) étant fixé dans une matrice (2; 15; 18) correspondant aux dimensions extérieures du profilé, **caractérisé en ce qu'**une zone, située entre les extrémités de profilé, d'un profilé creux (1) inséré d'une matrice creuse (2; 15; 18) divisée, présente un élargissement de section transversale (6) correspondant aux dimensions finales prévues du profilé creux (1), **en ce qu'**un ou deux pistons axiaux (8; 16; 17) disposés à l'opposé l'un de l'autre et à l'intérieur d'un espace creux (10) de la matrice creuse (2; 15; 18) divisée, en étant logés de façon à pouvoir effectuer un déplacement, sont prévus, la course de manoeuvre de ces pistons provoquant l'élargissement de la section transversale (6), dans le but d'augmenter l'épaisseur de paroi.

8. Dispositif selon la revendication 7, **caractérisé en ce que** la matrice creuse (18) présente un autre élargissement de section transversale (20) associé à l'extrémité du profilé creux (1).

FIG.1

FIG.2

FIG. 3

$p_i$

$F_A$

$F_A$, $p_i$

16.2  16.1  13  17.1  17.2

EP 0 892 689 B1